# EUROPÄISCHE PATENTSCHRIFT

(11) **EP 3 919 792 B1**
(45) Veröffentlichungstag und Bekanntmachung des Hinweises auf die Patenterteilung: **09.08.2023**
(21) Anmeldenummer: 21177151.4
(22) Anmeldetag: 01.06.2021
(51) Int. Cl.: F16K 27/02, E03C 1/10

(54) **VENTILKÖRPER**
VALVE BODY
CORPS DE SOUPAPE

(30) Priorität: 04.06.2020 DE 102020114892
(43) Veröffentlichungstag der Anmeldung: 08.12.2021
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- EP-A1- 2 644 788
- EP-A1- 2 644 789
- WO-A1-2018/121812
- CN-U- 203 784 325
- US-A- 4 790 346
- US-A- 5 771 921
- US-A- 5 813 702
- US-A1- 2002 166 593

## Beschreibung

Die vorliegende Erfindung betrifft einen Ventilkörper zur Verwendung als Teil eines Ventils mit einem Strömungskanal und einem in dem Strömungskanal angeordneten Ventilsitz. Einen weiteren Gegenstand der Erfindung bildet ein Ventil, insbesondere ein Servoventil, mit einem zwischen einem ersten Ventilkörper und einem zweiten Ventilkörper angeordneten Schließelement zum Öffnen und Schließen eines Ventilsitzes, einem anströmseitigen Ventileinlauf, einem abströmseitigen Ventilauslauf und einem Strömungskanal zur Verbindung des Ventileinlaufs mit dem Ventilauslauf.

Derartige Ventilkörper und Ventile mit solchen Ventilkörpern werden in unterschiedlichen Bereichen der Technik verwendet. Über einen Ventileinlauf strömt ein Fluid in das Ventil ein. Der Ventileinlauf ist über einen im Ventilkörper angeordneten Strömungskanal mit dem Ventilauslauf verbunden, über welchen das Fluid aus dem Ventilauslauf des Ventils austritt. Der Stand der Technik wird zum Beispiel in US4790346 und EP2644789 beschrieben.

Um den Fluidfluss schalten zu können, ist in dem Strömungskanal ein Ventilsitz angeordnet. Dieser kann derart mit einem Schließelement des Ventils zusammenwirken, dass das Fluid am Durchströmen des Strömungskanals vom Ventileinlauf zum Ventilauslauf gehindert wird. Zu diesem Zweck kann sich das gegenüber dem Ventilsitz bewegbar angeordnete Schließelement auf den Ventilsitz legen und so den Strömungskanal schließen.

Solche Ventile können jedoch nicht im Übergang zwischen Leitungsbereichen unterschiedlicher Gefährdungskategorien, wie einem Leitungsbereich eines sauberen Fluidnetzes, beispielsweise einem Trinkwasserleitungsnetz, und einem potentiell verunreinigten Leitungsbereich eingesetzt werden. Denn an einem solchen Übergang ist eine Kontaminationssicherheit wesentlich. Insbesondere giftige Stoffe, radioaktive, mutagene und kanzerogene Substanzen sowie mikrobielle und virale Erreger müssen an einem solchen Übergang daran gehindert werden, von einem verunreinigten auslassseitigen Fluid über das Ventil entgegen dessen Hauptströmungsrichtung in ein sauberes Fluidnetz und so in eine saubere Fluidquelle zu gelangen.

Beim Öffnen herkömmlicher Ventile können jedoch Verwirbelungen zwischen den beidseitig des Ventilsitzes befindlichen Fluiden auftreten. Ebenso kann ein ventileinlaufseitiger Druckabfall oder ein ventilauslaufseitiger Druckanstieg ein Rücksaugen bzw. Rückdrücken des ventilauslaufseitigen Fluids entgegen der Hauptströmungsrichtung des Ventils bewirken. Beides kann zu einem Rückfluss des Fluids vom Ventilauslauf über den Ventilsitz zum Ventileinlauf führen, welcher zur Wahrung der Kontaminationssicherheit verhindert werden muss. Die bekannten Ventile sind jedoch ungeeignet, um einen solchen Rückfluss im geöffneten Zustand zu verhindern. So könnte es bei der Verwendung der bekannten Ventile, beispielsweise im Übergang zwischen einem Trinkwasserleitungsnetzes und einem Leitungsbereich, welcher mit Schmutz- oder Abwasser in Kontakt kommen kann, zu einer Verunreinigung des gesamten Trinkwasserleitungsnetzes kommen.

Um dies zu verhindern, muss bei herkömmlichen Ventilen vor oder nach dem Ventil eine zusätzliche Trennstelle zwischen den Leitungsbereichen unterschiedlicher Gefährdungskategorien vorgesehen werden, welche eine für den jeweiligen Anwendungsfall ausreichend hohe Kontaminationssicherheit gewährleistet. Diese Trennstelle wird durch ein zusätzliches Trennelement gebildet, welches im Übergang zwischen den beiden Leitungsbereichen angeordnet und über Verbindungsstellen mit beiden Leitungsbereichen verbunden ist. Mit einem solchen zusätzlichen Trennelement lassen sich die Leitungsbereiche mit einer ausreichend hohen Kontaminationssicherheit voneinander trennen.

Da sowohl das Trennelement als auch das Ventil jeweils mindestens zwei Anschlüsse zur Verbindung mit den beiden Leitungsbereichen bzw. zur Einbindung in einen der Leitungsbereiche aufweisen, ist der Einsatz herkömmlicher, die Verwendung zusätzlicher Trennelemente erfordernder Ventile mit einem erhöhten Montageaufwand verbunden. Denn an jedem dieser Anschlüsse muss bei der Montage eine dichte Verbindung hergestellt werden, was arbeits- und zeitaufwendig ist. Zudem stellt jede Verbindungsstelle an diesen Anschlüssen eine potentielle Schwachstelle des jeweiligen Leitungsbereichs dar und birgt somit ein gewisses Leckagerisiko in sich.

Die **Aufgabe** der vorliegenden Erfindung liegt daher darin, einen Ventilkörper und ein Ventil anzugeben, die sich bei hoher Kontaminationssicherheit gleichzeitig durch einen geringen Montageaufwand und ein geringes Leckagerisiko auszeichnen.

Diese Aufgabe wird bei einem Ventilkörper der eingangs genannten Art dadurch **gelöst**, dass der Strömungskanal eine einstückig angeformte Injektor-Trennstrecke aufweist.

Durch die einstückig angeformte Injektor-Trennstrecke kann der Ventilkörper Leitungsbereiche kontaminationssicher trennen, so dass ein zusätzlich einzusetzendes Trennelement nicht erforderlich ist. Der Ventilkörper kann direkt, d. h. ohne ein zusätzliches Trennelement, im Übergang zwischen Leitungsbereichen unterschiedlicher Gefährdungskategorien eingesetzt werden. Die Verbindungsstellen zwischen dem Ventilkörper und einem zusätzlichen Trennelement fallen auf diese Weise weg. Da weniger Verbindungen bei der Montage hergestellt werden müssen, wird der Montageaufwand und zugleich das Leckagerisiko verringert.

Erfindungsgemäß weist der Ventilkörper einen anströmseitigen Ventileinlauf und einen abströmseitigen Ventilauslauf auf. Der Ventilkörper kann über den Ventileinlauf und den Ventilauslauf mit Leitungsbereichen verbindbar sein. Als Teil eines Ventils kann der Ventilkörper bei einem Austausch anderer Ventilteile zur Wartung oder Reparatur über den Ventileinlauf und den Ventilauslauf mit Leitungsbereichen verbunden bleiben. Verbindungen des Ventileinlaufs und des Ventilauslaufs mit Leitungsbereichen müssen nicht gelöst und neu hergestellt werden. Der Wartungs- oder Reparaturaufwand kann verringert werden. Der Ventileinlauf kann über den Strömungskanal mit dem Ventilauslauf verbunden sein.

Erfindungsgemäß ist zumindest der Ventilsitz, bevorzugt sind auch der Ventileinlauf und der Ventilauslauf, einstückig mit dem Ventilkörper ausgebildet. Durch die mit dem Ventilkörper einstückige Ausbildung können der Ventileinlauf, der Ventilauslauf und/oder der Ventilsitz zusammen mit der Injektor-Trennstrecke einen einstückigen Ventilkörper bilden.

Erfindungsgemäß ist im Strömungskanal ist die Injektor-Trennstrecke nach Art einer Freistrahlstrecke ausgebildet. Entlang der Hauptströmungsrichtung strömendes Fluid kann über die Injektor-Trennstrecke vom Ventileinlauf zum Ventilauslauf gelangen, indem es die Injektor-Trennstrecke als Freistrahl überwindet, d. h. ohne durch eine Wandung begrenzt zu werden.

Die Injektor-Trennstrecke kann eine Unterdruckbarriere bilden. Die Übertragung eines ventileinlaufseitigen Druckabfalls über die Injektor-Trennstrecke auf den Ventilauslauf kann durch die als Unterdruckbarriere ausgebildete Injektor-Trennstrecke verhindert werden. Ein Rücksaugen des ventilauslaufseitigen Fluids entgegen der Hauptströmungsrichtung wird verhindert. Eine hohe Kontaminationssicherheit kann erzielt werden.

Erfindungsgemäß weist der Ventilkörper von der Injektor-Trennstrecke nach ventilaußen erstreckende Durchbrüche auf. Ein Rückdrücken eines ventilauslaufseitigen Fluids entgegen der Hauptströmungsrichtung kann verhindert werden, da zurückdrückendes Fluid über die Durchbrüche austreten kann. Auf diese Weise kann die Injektor-Trennstrecke eine ventilkörpereigene Rückflusssicherung zur Verhinderung eines Rückflusses des Fluids vom Ventilauslauf über den Ventilsitz zum Ventileinlauf bilden.

Die Injektor-Trennstrecke kann den Strömungskanal entlang der Hauptströmungsrichtung in einen vor der Injektor-Trennstrecke liegenden Bereich einer niedrigeren Gefährdungskategorie und einen nach der Injektor-Trennstrecke liegenden Bereich einer höheren Gefährdungskategorie unterteilen. Die Gefährdungskategorien können beispielsweise nach DIN EN 1717 bestimmt sein.

Erfindungsgemäß ist die Injektor-Trennstrecke zwischen dem Ventilsitz und dem Ventilauslauf angeordnet. Auf diese Weise kann ein Fluid nur über die Injektor-Trennstrecke strömen, wenn der Ventilsitz freigegeben ist. Ein dauerhaftes Strömen des Fluids über die Injektor-Trennstrecke, insbesondere ein Austreten des bei verschlossenem Ventilsitz strömenden Fluids durch Durchbrüche des Ventilkörpers, kann vermieden werden.

Der vor der Injektor-Trennstrecke liegende Strömungskanalabschnitt, insbesondere ein vom Ventilsitz kommender Strömungskanalabschnitt, kann einen geringeren Querschnitt als der sich an die Injektor-Trennstrecke anschließende Strömungskanalabschnitt aufweisen. Der vor der Injektor-Trennstrecke liegende Strömungskanalabschnitt kann auf diese Weise nach Art eines Injektors zur Einspritzung des Fluids in die Injektor-Trennstrecke dienen. Durch den größeren Durchmesser des ventilauslaufseitigen Strömungskanalabschnitts kann ein entsprechendes Rückdrücken entgegen der Hauptströmungsrichtung vermieden werden.

Gemäß einer vorteilhaften Ausgestaltung der Erfindung ist die Injektor-Trennstrecke, insbesondere teilweise, von einem käfigförmigen Rahmen umgeben. Der käfigförmige Rahmen kann mehrere im Wesentlichen parallel zueinander verlaufende Streben aufweisen. Über den Rahmen kann insbesondere entgegen der Hauptströmungsrichtung in die Injektor-Trennstrecke ventilauslaufseitig einströmendes Fluid austreten, ohne die Injektor-Trennstrecke überwinden zu können, insbesondere ohne zum ventileinlaufseitigen Bereich des Ventilkörpers gelangen zu können.

Zwischen den Streben können sich nach Art von Durchbrüchen des Ventilkörpers ausgebildete Fenster angeordnet sein. Durch die Fenster kann Fluid auf einfache Weise aus dem Ventilkörper ausströmen.

In vorteilhafter Weise kann der Rahmen aus einem formstabilen Material, insbesondere einem Hartplastik oder einem Metall, gefertigt sein. Der käfigförmige Rahmen kann die Stabilität des Ventilkörpers, insbesondere im Bereich der Injektor-Trennstrecke, verbessern. Vorzugsweise besteht der Rahmen gänzlich aus formstabilen Materialien, insbesondere einem formstabilen Material. Auf den Rahmen wirkende Kräfte, beispielsweise während der Montage des Ventilkörpers auftretende Montagekräfte, können über den Rahmen aus formstabilem Material in weitere Bereiche des Ventilkörpers abgeleitet werden. Der Rahmen kann vorzugsweise einstückig mit dem Ventilkörper ausgebildet sein.

In diesem Zusammenhang ist es weiter vorteilhaft, wenn der käfigförmige Rahmen mehrere gleichmäßig zueinander winkelversetzte Streben, insbesondere vier um 90° winkelversetzte Streben, aufweist. Die Streben können in Umfangsrichtung um die Injektor-Trennstrecke winkelversetzt angeordnet sein. Durch den gleichmäßigen Winkelversatz der einzelnen Streben zueinander können auftretende Kräfte gleichmäßig über die Streben verteilt abgeleitet werden. Insbesondere können die Streben im Wesentlichen parallel zu einer Längsachse der Injektor-Trennstrecke verlaufen.

Erfindungsgemäß wird vorgesehen, dass anströmseitig der Injektor-Trennstrecke eine Düse zur Bündelung eines strömenden Fluids im Strömungskanal angeordnet ist. Mit der anströmseitigen Düse, d. h. einer relativ zur Injektor-Trennstrecke entlang der Hauptströmungsrichtung ventileinlaufseitig liegenden Düse, ist einströmendes Fluid zu einem gebündelten Freistrahl bündelbar. Der gebündelte Freistrahl kann die Injektor-Trennstrecke gebündelt überwinden, ohne dass das Fluid hierbei mit dem Randbereich der Injektor-Trennstrecke, wie beispielsweise dem käfigförmigen Rahmen, in Kontakt kommt.

In diesem Zusammenhang hat es sich als vorteilhaft erwiesen, wenn die Düse abströmseitig nach Art eines nippelförmigen Vorsprungs ausgebildet ist. Die Ausbildung der Düse nach Art eines nippelförmigen, d. h. entlang der Hauptströmungsrichtung gegenüber angrenzenden Bereichen des Ventilkörpers hervorstehenden, Vorsprungs ermöglicht auf einfache Weise ein Ablenken etwaig zurückgespritzten Fluids von einer Düsenöffnung der Düse weg. Eine Kontaminierung des Düseninneren durch das zurückgespritzte Fluid kann auf einfache Weise vermieden werden. Vorzugsweise ist die Düse entlang der Längsachse der Injektor-Trennstrecke, wie auch die Injektor-Trennstrecke selbst, rotationssymmetrisch ausgebildet.

Als weiter vorteilhaft hat es sich erwiesen, wenn die Düse, insbesondere vollständig, außerhalb des käfigförmigen Rahmens angeordnet ist. Durch diese Anordnung kann die, insbesondere abströmseitig, nach Art eines nippelförmigen Vorsprungs ausgebildete Düse nach ventilkörperaußen abgeschirmt sein. Die quer zur Längsachse der Injektor-Trennstrecke liegenden Seiten der Düse können auf diese Weise abgedeckt werden. Insbesondere können diese Bereiche der Düse nicht durch die sich zwischen den Streben des käfigförmigen Rahmens erstreckenden Fenster freigelegt sein.

Eine weitere Ausgestaltung sieht vor, dass in der Injektor-Trennstrecke eine, insbesondere scheibenförmige, Blende angeordnet ist. Die Blende kann eine Blendenöffnung aufweisen, durch welche das Fluid entlang der Injektor-Trennstrecke durch die Blende hindurchtreten kann. Die Blende kann sich im Wesentlichen quer zur Längsachse der Injektor-Trennstrecke in diese hineinerstrecken. In vorteilhafter Weise kann die Blende an den Streben des käfigförmigen Rahmens angeordnet sein, insbesondere einteilig mit diesen ausgebildet sein. Die Blendenöffnung der Blende weist vorteilhafterweise einen größeren lichten Querschnitt als der entlang der Hauptströmungsrichtung vor der Injektor-Trennstrecke liegende Strömungskanalabschnitt auf. Insbesondere kann der lichte Querschnitt der Blendenöffnung größer als die Düsenöffnung sein. Die Blendenöffnung und die Düsenöffnung können vorzugsweise konzentrisch entlang der Längsachse der Injektor-Trennstrecke angeordnet sein. Die Blende kann als ein Schutz vor einem Zurückspritzen eines entlang der Injektor-Trennstrecke durch die Blende hindurchgetretenen Fluids dienen. Trifft der Fluidstrahl entlang der Hauptströmrichtung hinter der Blende auf ein Hindernis und wird dort reflektiert oder gestreut, so können einzelne Rückspritzer durch die Blende vor einem Zurückspritzen bis zum Anströmbereich der Injektor-Trennstrecke und insbesondere der Düse abgehalten werden.

In diesem Zusammenhang hat es sich als besonders vorteilhaft erwiesen, wenn die Blende in der abströmseitigen Hälfte der Injektor-Trennstrecke angeordnet ist. Die abströmseitige Hälfte der Injektor-Trennstrecke ist jene Hälfte der Injektor-Trennstrecke, welche entlang der Hauptströmungsrichtung den zum Ventilauslauf führenden Strömungskanalabschnitt zugewandt ist. Die Anordnung der Blende in der abströmseitigen Hälfte der Injektor-Trennstrecke kann die Schutzwirkung der Blende vor einem Zurückspritzen des Fluids steigern.

Gemäß einem Ausführungsbeispiel der Erfindung ist der Ventilauslauf nach Art einer Schlauchtülle ausgebildet. Die Ausbildung nach Art einer Schlauchtülle ermöglicht eine schnelle und zuverlässige Verbindung des Ventilkörpers mit einem schlauchförmigen Leitungsbereich.

Bei einer vorteilhaften Ausgestaltung der Erfindung ist der Ventileinlauf nach Art einer Gewindeverbindung, insbesondere mit einem Außengewinde, ausgebildet. Die Ausbildung des Ventileinlaufs nach Art einer Gewindeverbindung ermöglicht eine besonders zuverlässige und dichte Verbindung des Ventilkörpers mit einem ventileinlaufseitigen Leitungsbereich. Insbesondere zur Verbindung mit einem Leitungsbereich niedriger Gefährdungskategorie hat sich eine Gewindeverbindung als vorteilhaft erwiesen, da ein Eindringen von potentiell kontaminierenden, ventilaußenseitigen Substanzen über die Verbindung mit dem Ventileinlauf verhindert werden kann. Ein Ventileinlauf nach Art einer Gewindeverbindung ist auf einfache Weise zur Herstellung einer dichten Verbindung mit einem entsprechenden Gegengewindeverbinder eines Leitungsbereichs verbindbar.

Bei einem Ventil der eingangs genannten Art zur Lös u n g der vorstehenden Aufgabe wird vorgeschlagen, dass der erste Ventilkörper als ein erfindungsgemäßer Ventilkörper ausgebildet ist.

Durch die einstückig angeformte Injektor-Trennstrecke kann der Ventilkörper Leitungsbereiche kontaminationssicher trennen, so dass ein zusätzlich einzusetzendes Trennelement nicht erforderlich ist. Das Ventil kann direkt, d. h. ohne ein zusätzliches Trennelement, im Übergang zwischen Leitungsbereichen unterschiedlicher Gefährdungskategorie eingesetzt werden. Die Verbindungsstellen zwischen dem Ventil und einem zusätzlichen Trennelement fallen auf diese Weise weg. Da weniger Verbindungen bei der Montage hergestellt werden müssen, wird der Montageaufwand und zugleich das Leckagerisiko verringert. Bei dem Ventil kann es sich um ein eigenmediumbetätigtes Ventil, d. h. ein das zu schaltende Fluid zur Ventilbetätigung nutzende Ventil, insbesondere ein eigenmediumbetätigtes Servoventil, handeln.

Die in Zusammenhang mit dem erfindungsgemäßen Ventilkörper beschriebenen Merkmale können einzeln oder in Kombination auch bei dem Ventil zur Anwendung kommen. Es ergeben sich die gleichen Vorteile, welche bereits beschrieben wurden.

Weitere Einzelheiten und Vorteile eines erfindungsgemäßen Ventilkörpers sowie eines erfindungsgemäßen Ventils sollen nachfolgend anhand der in den Figuren schematisch dargestellten Ausführungsbeispiele der Erfindung exemplarisch erläutert werden. Darin zeigen:
- Fig. 1: ein erfindungsgemäßes Ventil in einer ersten Ausführungsform,
- Fig. 2: einen Ventilkörper des Ventils gemäß Fig. 1,
- Fig. 3: einen Längsschnitt durch den Ventilkörper gemäß Fig. 2,
- Fig. 4: eine Detailansicht eines Längsschnitts durch das Ventil gemäß Fig. 1,
- Fig. 5: eine perspektivische Detailansicht eines Längsschnitts durch das Ventil gemäß Fig. 1 und
- Fig. 6: einen Längsschnitt durch einen Ventilkörper gemäß einer zweiten Ausführungsform.

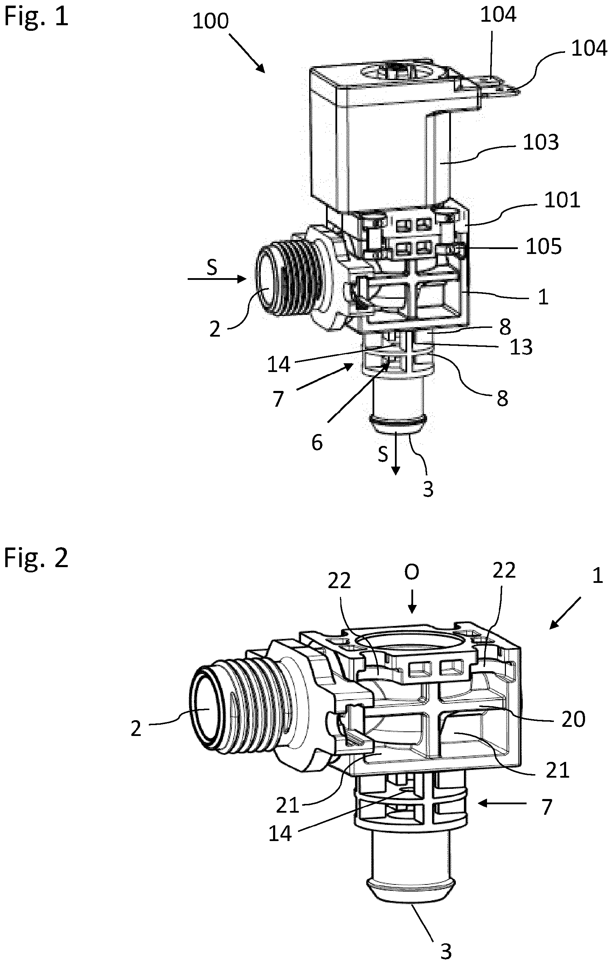

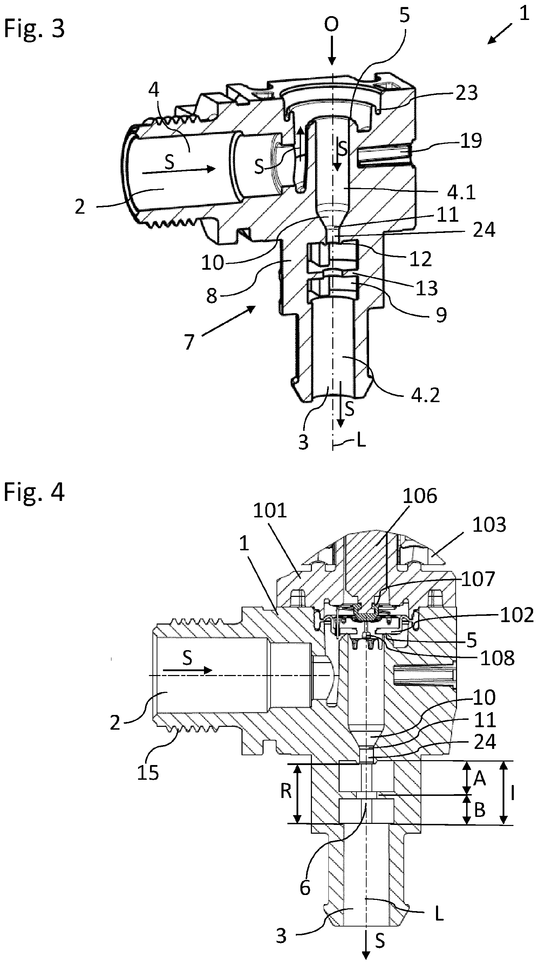

Fig. 1 zeigt ein erfindungsgemäßes Ventil 100. Das Ventil 100 weist einen ersten Ventilkörper 1 und einen zweiten Ventilkörper 101 sowie ein zwischen dem ersten Ventilkörper 1 und dem zweiten Ventilkörper 101 angeordnetes Schließelement 102 auf. Das Schließelement 102 kann als Schließmembrane ausgebildet sein und zwischen den Ventilkörpern 1, 101 eingespannt sein, weshalb das Schließelement 102 in Fig. 1 nicht zu erkennen ist, vgl. auch Fig. 4.

An dem zweiten Ventilkörper 101 ist zusätzlich ein Ventilaktuator 103 angeordnet. Mit diesem Ventilaktuator 103 kann das Schließelement 102 innerhalb des Ventils 100 betätigt werden. Zur Betätigung kann der Ventilaktuator 103 über entsprechende Anschlussstellen 104 elektrisch angesteuert werden. Auf diese Weise kann das Ventil 100 auch als Servoventil, welches neben einer gänzlich geöffneten und einer gänzlich geschlossenen Stellung auch mindestens einer Zwischenstellung, insbesondere stufenlos mehrere Zwischenstellungen, einnehmen kann, ausgebildet werden. Zur Betätigung kann der Ventilaktuator 103, beispielsweise über einen mit dem Schließelement 102 verbundenen Plunger, die Position des Schließelements 102 direkt schalten. Ebenso kann der Ventilaktuator 103 als Vorsteuersystem ausgebildet sein und die Position des Schließelements 102 indirekt schalten.

Der Ventilkörper 1 ist mit dem zweiten Ventilkörper 101 über Befestigungsmittel 105 fluiddicht verbunden. Der vom zweiten Ventilkörper 101 und im Ventilaktuator 103 getrennte Ventilkörper 1 ist in den Fig. 2 und 3 jeweils gesondert dargestellt. Zur Reduzierung des Gesamtgewichts weist der Ventilkörper 1 mehrere Ausnehmungen 21 auf, durch welche Material und somit Gesamtgewicht eingespart werden kann. Um die Stabilität des Ventilkörpers 1 weiterhin zu gewährleisten, ist der Ventilkörper 1 mit mehreren Stabilisierungsrippen 20 versehen. Auf diese Weise ergibt sich ein auf der Außenseite fachwerkartig aufgebauter Ventilkörper 1.

Im Randbereich der Oberseite O des Ventilkörpers 1 sind mehrere Befestigungspunkte 22 vorgesehen. An diese Befestigungspunkte 22 können die Befestigungsmittel 105 des zweiten Ventilkörpers 101 zur Verbindung der beiden Ventilkörper 1, 101 miteinander eingreifen.

Der Ventilkörper 1 weist einen anströmseitigen Ventileinlauf 2 auf, über welchen ein zu steuerndes Fluid in den Ventilkörper 1 einströmen kann, sowie einen Ventilauslauf 3, über welchen dieses Fluid aus dem Ventilkörper 1 wieder ausströmen kann.

Wie in Fig. 3 gezeigt, erstreckt sich zwischen dem Ventileinlauf 2 und dem Ventilauslauf 3 ein Strömungskanal 4, welcher den Ventileinlauf 2 mit dem Ventilauslauf 3 verbindet. Ein durch den Ventilkörper 1 vom Ventileinlauf 2 zum Ventilauslauf 3 strömendes Fluid folgt hierbei der Hauptströmungsrichtung S. Innerhalb des Ventilkörpers 1 wird diese Hauptströmungsrichtung S mehrmals umgeleitet. Zunächst verläuft die Hauptströmungsrichtung S parallel zur Längsachse des Ventileinlaufs 2, bevor diese im Inneren des Ventilkörpers 1 im Wesentlichen rechtwinklig in Richtung eines Ventilsitzes 5 umgeleitet wird. Dieser im Strömungskanal 4 angeordnete Ventilsitz 5 stellt den Bereich einer Strömungsrichtungsumkehr dar. Wie in Fig. 3 zu erkennen ist, verläuft die Hauptströmungsrichtung S in dem den Ventilsitz 5 radial nach außen umgebenden Bereich des Strömungskanals 4 in Richtung der Oberseite O des Ventilkörpers 1, während die Hauptströmungsrichtung S in dem vom Ventilsitz 5 umgebenden Strömungskanalabschnitt 4.1 von der Oberseite O wegführt.

Die Oberseite O des Ventilkörpers 1 ist im Bereich des Ventilsitzes 5 nicht geschlossen. Dies ermöglicht eine einfachere Bearbeitung der Innenseite des Ventilkörpers 1. Insbesondere ermöglicht die teilweise geöffnete Oberseite O des Ventilkörpers 1 die Aufnahme einer Wulst des Schließelements 102 in einer entsprechenden Aufnahmenut 23, wie in Fig. 4 dargestellt. Auf diese Weise kann das Schließelement 102 besonders einfach zwischen den beiden Ventilkörpern 1, 101 des Ventils 100 angeordnet werden. Über die teilweise geöffnete Oberseite O kann der zweite Ventilkörper 101 an dem Ventilkörper 1 angeordnet werden. Auf diese Weise kann der Ventilaktuator 103 des zweiten Ventilkörpers 101 zur Betätigung des Ventils 100 durch die geöffnete Oberseite O auf das Schließelement 102 einwirken.

Anschließend an dem Strömungskanalabschnitt 4.1 weist der Strömungskanal 4 eine einstückig an den Ventilkörper 1 angeformte Injektor-Trennstrecke 6 auf. Ein sich an diese Injektor-Trennstrecke 6 anschließender Strömungskanalabschnitt 4.2 führt dann zum Ventilauslauf 3. Die Hauptströmungsrichtung S verläuft in den beiden Strömungskanalabschnitten 4.1, 4.2 sowie in der Injektor-Trennstrecke 6 entlang der Längsachse L der Injektor-Trennstrecke 6. Die Injektor-Trennstrecke 6 ist hierbei zwischen dem Ventilsitz 5 und dem Ventilauslauf 3 angeordnet.

Wie in Fig. 1 bis Fig. 5 erkennbar, ist die Injektor-Trennstrecke 6 teilweise von einem käfigförmigen Rahmen 7 umgeben. Dieser Rahmen 7 besteht aus mehreren Streben 8, welche die Injektor-Trennstrecke 6 umgeben, ohne in diese einzutreten oder ein Hindernis für einen entlang der Injektor-Trennstrecke 6 verlaufenden Fluidstrahl darzustellen. Insgesamt weist dieser käfigförmige Rahmen 7 vier parallel zur Längsachse L der Injektor-Trennstrecke 6 verlaufende plattenförmige Streben 8 auf. Diese vier Streben 8 sind gleichmäßig zueinander um im Wesentlichen 90° winkelversetzt. Durch die gleichmäßige Verteilung der einzelnen Streben 8 des Rahmens 7 kann eine ebenso gleichmäßige axiale Kraftübertragung entlang des Rahmens 7 erfolgen. Beispielsweise kann eine ausgeübte Kraft beim Aufschieben eines Schlauches auf den nach Art einer Schlauchtülle ausgebildeten Ventilauslauf 3 über den Rahmen 7 in den weiteren Ventilkörper 1 übertragen und abgeleitet werden. Ein Auftreten von Ungleichmäßigkeiten bei der Kraftübertragung und hieraus resultierende Verformungen des Rahmens 7 und Beschädigungen des Ventilkörpers 1 können vermieden werden.

Zwischen den einzelnen Streben 8 des Rahmens 7 erstrecken sich jeweils Fenster 9. Diese Fenster 9 sind nach Art von Durchbrüchen des Ventilkörpers 1 ausgebildet, welche die Injektor-Trennstrecke 6 mit der Außenseite des Ventilköpers 1 verbinden. Durch diese Fenster 9 ermöglicht der Rahmen 7, dass das entgegen der Hauptströmungsrichtung S zurückströmende Fluid aus dem Ventilkörper 1 austreten kann, ohne bis zurück zum Ventilsitz 5 oder zum Ventileinlauf 2 strömen zu können. Da die Injektor-Trennstrecke 6 nicht von einem abgeschlossenen Volumen, sondern vielmehr von dem käfigförmigen Rahmen 7 umgeben ist, kann sich entlang der Injektor-Trennstrecke 6 kein Unterdruck aufbauen, welcher ein Fluid entgegen der Hauptströmungsrichtung S vom Ventilauslauf 3 in den Ventilkörper 1 hineinziehen könnte. Auf diese Weise dient die Injektor-Trennstrecke 6 als Rückflussverhinderer, welcher effektiv jeden Rückfluss eines Fluids entgegen der Hauptströmungsrichtung S vom Ventilauslauf 3 hin zum Ventilsitz 5 und zum Ventileinlauf 2 verhindern kann.

Zusätzlich weist der Ventilkörper 1 anströmseitig der Injektor-Trennstrecke 6 eine Düse 10 mit einer Düsenöffnung 11 auf, mit welcher ein entlang der Hauptströmungsrichtung S durch den Strömungskanalabschnitt 4.1 in Richtung der Injektor-Trennstrecke 6 strömendes Fluid gebündelt wird. Diese Düse 10 mündet abströmseitig in einen Düsenkanal 24, welcher einen Teil des Strömungskanals 4 bildet und die Düse 10 mit der Injektor-Trennstrecke 6 verbindet. Der Düsenkanal 24 mündet in die Injektor-Trennstrecke 6.

Der lichte Querschnitt des Düsenkanals 24 entspricht im Wesentlichen dem lichten Querschnitt der Düsenöffnung 11 der Düse 10. Ein durch die Düse 10 gebündelter Fluidstrahl tritt auf diese Weise mit einem Durchmesser, welcher dem Durchmesser der Düsenöffnung 11 entspricht, in die Injektor-Trennstrecke 6 ein und kann diese im Freiflug überwinden. Zu einem Kontakt dieses Fluidstrahls mit der Umgebung, wie beispielsweise dem Rahmen 7, kommt es durch diese Bündelung nicht. Insoweit kann eine entgegen der Hauptströmungsrichtung S rückwirkende Kontamination vermieden werden.

Zudem ist in der Injektor-Trennstrecke 6 eine scheibenförmige Blende 13 angeordnet. Diese Blende 13 weist eine Blendenöffnung 14 auf, deren lichter Querschnitt größer als der lichte Querschnitt des Düsenkanals 24 ist. Der von der Düse 10 über den Düsenkanal 24 in die Injektor-Trennstrecke 6 eingestrahlte Fluidstrahl weist auf diese Weise einen Querschnitt auf, welcher unterhalb des lichten Querschnitts der Blendenöffnung 14 liegt. Der Fluidstrahl kann auf diese Weise kontaktlos durch die Blendenöffnung 14 hindurchtreten. Die Blendenöffnung 14 ist zusammen mit dem Düsenkanal 24 entlang der Längsachse L der Injektor-Trennstrecke 6 konzentrisch angeordnet.

Die scheibenförmige Blende 13 ist einstückig mit den Streben 8 des Rahmens 7 ausgebildet. In radialer Richtung schließt diese Blende 13 außenseitig mit den Streben 8 bündig ab.

Die scheibenförmige Blende 13 ist entlang der Längsachse L der Injektor-Trennstrecke 6 nicht zentriert, sondern in Richtung des Ventilauslaufs 3 versetzt angeordnet. Auf diese Weise teilt die Mittelebene der Blende 13 die Länge I der Injektor-Trennstrecke 6 entlang der Hauptströmungsrichtung S in eine anströmseitige Strecke A und eine abströmseitige Strecke B, wie in Fig. 4 gezeigt. Hierbei ist die Strecke A größer als die Strecke B. Die Blende 13 ist folglich in der abströmseitigen Hälfte der Injektor-Trennstrecke 6 angeordnet.

Die Blende 13 dient als zusätzlicher Rückspritzschutz. Ein bereits durch die Blendenöffnung 14 hindurchgetretener Fluidstrahl wird, sollte es zu einem Kontakt mit der Wand des Ventilkörpers 1 oder einem über die Fenster 9 in diesem abströmseitigen Bereich der Injektor-Trennstrecke 6 eindringenden Fremdkörper kommen, zwar gestreut, so dass es zu einem Zurückspritzen kommt, die einzelnen Rückspritzer werden jedoch von der Blende 13 aufgehalten. Es kommt so nicht zu einem Zurückspritzen bis zum anströmseitigen Anfang der Injektor-Trennstrecke 6. Eine Kontamination des anströmseitigen Bereichs des Ventils 100 wird auf diese Weise zusätzlich verhindert.

Abströmseitig, d. h. entlang der Hauptströmungsrichtung S der Injektor-Trennstrecke 6 zugewandt, ist der Düsenkanal 24 optional nach Art eines nippelförmigen Vorsprungs 12 ausgebildet. Wie in Fig. 3 bis Fig. 5 gezeigt, steht dieser nippelförmige Vorsprung 12 entlang der Hauptströmungsrichtung S gegenüber dem ihn umgebenden Bereich des Ventilkörpers 1 hervor. Selbst in dem Fall, dass es dennoch zu einem Zurückspritzen eines Teils des Fluids kommt, fungiert der nippelförmige Vorsprung 12 als ein Deflektor, welcher zurückspitzendes Fluid durch seine schräg angestellte Außenwandung ablenkt.

Die Länge R des Rahmens 7 ist hierbei länger als die Länge I der Injektor-Trennstrecke 6, welche unmittelbar anschließend an den Düsenkanal 24 beginnt.

In dem dargestellten Ausführungsbeispiel ist die Düse 10 entlang der Hauptströmungsrichtung S vollständig außerhalb des käfigformen Rahmens 7 angeordnet. Relativ zum Rahmen 7 ist die Düse 10 entgegen der Hauptströmungsrichtung S zurückversetzt angeordnet. Auf diese Weise wird die gesamte Düse 10 gegen äußere Einwirkungen, welche beispielsweise durch die Fenster 9 auf diese einwirken könnten, abgeschirmt.

Um den Ventilkörper 1 sowie das gesamte Ventil 100 bei der Montage befestigen zu können, weist der Ventilkörper 1 mindestens eine Befestigungsöffnung 19 auf. Mit dieser Befestigungsöffnung 19 kann der Ventilkörper 1 und das Ventil 100 an einem komplementär ausgeformten Montageelement befestigt, beispielsweise aufgesteckt, werden. Alternativ kann die Befestigungsöffnung 19 mit einem Innengewinde versehen werden, um bei der Montage an einem entsprechenden Gegenelement mit Außengewinde, beispielsweise einer Schraube oder einer Gewindestange, befestigt zu werden.

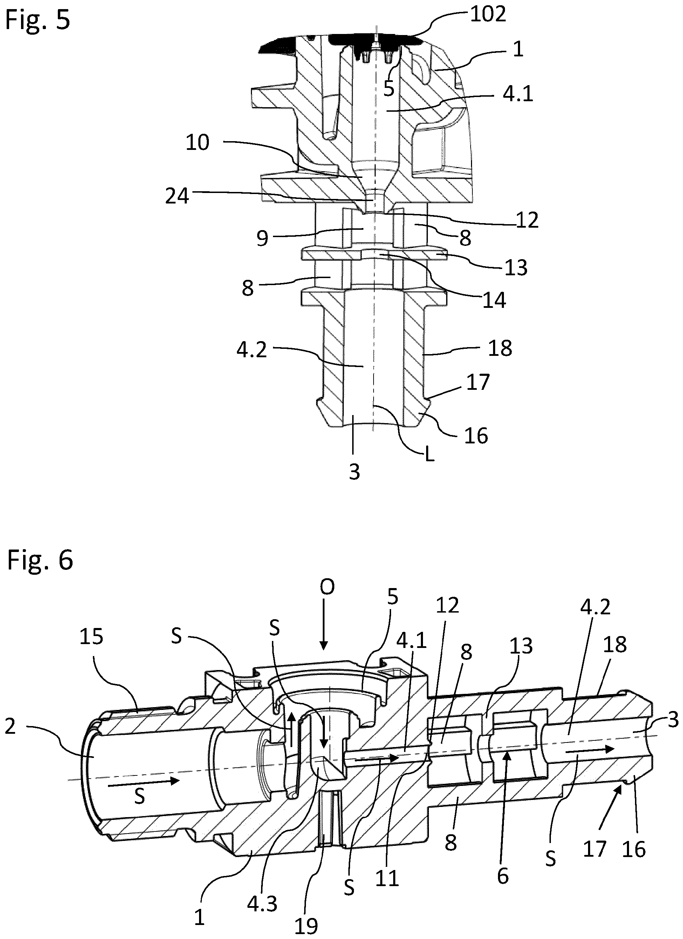

In den Fig. 4 und 5 ist das zwischen den Ventilkörpern 1, 101 angeordnete Schließelement 102 ausschnittsweise zu erkennen. Dieses Schließelement 102 ist jeweils in der geschlossenen Stellung des Ventils 100 gezeigt. In dieser Stellung liegt das Schließelement 102 vollumfänglich auf dem Ventilsitz 5 auf und verschließt diesen fluiddicht. Durch das Zusammenwirken des Schließelements 102 mit dem Ventilsitz 5 wird der Strömungskanal 4 derart blockiert, dass ein über den Ventileinlauf 2 einströmendes Fluid den Ventilsitz 5 nicht passieren und folglich nicht aus dem Ventilauslauf 3 austreten kann.

Das dargestellte Ventil 100 ist als eigenmediumbetätigtes Servoventil ausgebildet. Zur Betätigung des Schließelements 102 weist dieses ein vom Ventilaktuator 103 betätigbares Pilotventil auf. Zu dem Pilotventil gehört ein im Schließelement 102 angeordneter Pilotkanal 108 sowie ein Pilotschließelement 106. Mit seinem elastischen Schließmittel 107 kann das Pilotschließelement 106 den Pilotkanal 108 verschließen.

Im dargestellten geschlossenen Zustand wird der Ventilsitz 5 durch das Schließelement 102 verschlossen, welches von dem sich im Bereich zwischen dem Schließelement 102 und dem Ventilkörper 101 befindlichen Fluid in Richtung des Ventilsitzes 5 gedrückt wird.

Zum Öffnen des Ventils 100 wird das plungerförmige Pilotschließelement 106 vom Pilotkanal 108 abgehoben und dieser so freigegeben. Hierzu ist das Pilotventil als bistabiles elektromagnetisches Ventil ausgebildet. Durch Bestromung eines zum Ventilaktuator 103 gehörigen Elektromagneten kann das Pilotschließelement 106 bistabil zwischen zwei Lagen hin und her überführt werden. In der ersten Lage verschließt das Pilotschließelement 106 den Pilotkanal 108 und in der zweiten Lage gibt das Pilotschließelement 106 den Pilotkanal 108 frei.

Das sich im Bereich zwischen dem Schließelement 102 und dem Ventilkörper 101 befindliche Fluid kann nunmehr durch den freigegebenen Pilotkanal 108 ausströmen. Das Schließelement 102 wird dann nicht mehr durch das Fluid in Richtung des Ventilsitzes 5 gedrückt, sondern durch das ihn entlang der Hauptströmungsrichtung S anströmende Fluid vom Ventilsitz 5 weggedrückt. Der Ventilsitz 5 wird auf diese Weise freigegeben.

Zum Schließen des Ventils 100 verschließt das Pilotschließelement 106 den Pilotkanal 108 wieder, so dass das Schließelement 102 durch sich das nunmehr im Bereich zwischen dem Schließelement 102 und dem Ventilkörper 101 aufstauende Fluid in Richtung des Ventilsitzes 5 gedrückt wird und diesen verschließt.

Fig. 6 zeigt eine alternative Ausgestaltung des Ventilkörpers 1, bei welchem der Ventileinlauf 2 und der Ventilauslauf 3 diametral gegenüberliegende Enden des Ventilkörpers 1 bilden. Während bei der ersten Ausführungsform, wie sie in den Fig. 1 bis 5 dargestellt ist, zwischen dem Ventileinlauf 2 und dem Ventilauslauf 3 ein Winkel von im Wesentlichen 90° besteht, sind der Ventileinlauf 2 und der Ventilauslauf 3 in der in Fig. 6 dargestellten Ausführungsform im Wesentlichen konzentrisch und zueinander fluchtend angeordnet. Der Ventilkörper 1 dieser Ausführungsform kann in einem gradlinigen Leitungsbereich, welcher zwei Leitungsbereiche unterschiedlicher Gefährdungskategorien miteinander verbinden, angeordnet werden.

Ähnlich wie bereits bei der zuvor beschriebenen Ausführungsform des Ventilkörpers 1 verläuft die Hauptströmungsrichtung S bei dieser Ausführungsform zunächst parallel zum Ventileinlauf 2, bevor sie im Ventilkörper 1 im Wesentlichen um 90° in Richtung der Oberseite O des Ventilkörpers 1 umgelenkt wird. Im Bereich des Ventilsitzes 5 erfolgt auch hier eine Strömungsrichtungsumkehr, wobei die Hauptströmungsrichtung S entlang des vom Ventilsitz 5 kommenden Strömungskanalabschnitts 4.3 von der Oberfläche O wegweist. Im Unterschied zu der zuvor beschriebenen ersten Ausführungsform erfolgt nach dem Strömungskanalabschnitts 4.3 eine erneute Strömungsumlenkung der Hauptströmungsrichtung S um im Wesentlichen 90° in den Strömungskanalabschnitt 4.1 des Strömungskanals 4. Die Hauptströmungsrichtung S in diesem Strömungskanalabschnitt 4.1 stimmt auch bei dieser Ausführungsform mit der Hauptströmungsrichtung S in der Injektor-Trennstrecke 6 und dem zum Ventilauslauf 3 führenden Strömungskanalabschnitt 4.2 überein.

Der lichte Querschnitt des Strömungskanalabschnitts 4.1 ist in diesem Ausführungsbeispiel kleiner als der lichte Querschnitt des Strömungskanalabschnitts 4.3, welcher dem Strömungskanalabschnitt 4.1 in Hauptströmungsrichtung S vorangeht. Ebenso ist der lichte Querschnitt des Strömungskanalabschnitts 4.2 größer als der lichte Querschnitt des Strömungskanalabschnitts 4.1. Durch den Strömungskanalabschnitt 4.1 kommt es daher zu einer Bündelung des Fluidflusses, so dass der Strömungskanalabschnitt 4.1 im Wesentlichen als Düse 10 fungiert. Vom Ende des Strömungskanalabschnitts 4.1 als Düsenöffnung 11 kann ein Fluidstrahl in Richtung des Strömungskanalabschnitts 4.2 in die Injektor-Trennstrecke 6 eingestrahlt werden. Auf eine zusätzliche Düse 10 kann verzichtet werden.

Die weiteren Merkmale dieser Ausführungsform entsprechen jenen der bereits voranstehend beschriebenen Ausführungsform des Ventilkörpers 1.

Sämtliche dargestellten Ausführungsformen weisen einen nach Art einer Schlauchtülle ausgebildeten Ventilauslauf 3 auf. Ein derartiger als Schlauchtülle ausgebildeter Ventilauslauf 3 weist einen auslaufseitigen Außenkonus 16 auf, welcher sich entgegen der Hauptströmungsrichtung S aufweitet. Entgegen der Hauptströmungsrichtung S an diesen anschließend erstreckt sich ein Klemmbereich 18 mit einem im Verhältnis zum maximalen Außendurchmesser des Außenkonus 16 verringerten Außendurchmesser. Auf diese Weise entsteht zwischen dem Außenkonus 16 und dem Klemmbereich 18 ein Hintergriff 17. Über den Außenkonus 16 kann ein schlauchartiger Leitungsbereich zur Verbindung mit dem Ventilkörper 1 geschoben werden. Bereits durch den Hintergriff 17 und die Aufweitung des Außenkonus 16 entgegen der Hauptströmungsrichtung S können sich Klemmkräfte zum Festklemmen des schlauchartigen Leitungsbereichs einstellen. Zusätzlich kann um den schlauchartigen Leitungsbereich im Bereich des Klemmbereichs 18 eine Schlauchschelle oder dergleichen zur zusätzlichen Befestigung des Leitungsbereichs an dem Ventilauslauf 3 vorgesehen werden, welche hinter den Hintergriff 17 zur zusätzlichen Fixierung hintergreifen kann.

Ebenso weisen die Ventileinläufe 2 bei sämtlichen dargestellten Ausführungsbeispielen jeweils ein Gewinde 15 auf, über welches ein Leitungsbereich mit einem entsprechenden Gegengewinde auf besonders einfache Art und Weise mit dem Ventilkörper 1 verbindbar ist. Eine Gewindeverbindung über das Gewinde 15 zeichnet sich insbesondere durch eine hohe erzielbare Dichtigkeit und folglich eine entsprechende hohe Kontemplationssicherheit gegenüber Substanzen aus, welche über die Verbindungsstelle zwischen Ventil 100 und Leitungsbereich von ventilaußen im Bereich des Ventileinlaufs 2 einzudringen versuchen.

Wenngleich sämtliche dargestellten Ausführungsformen jeweils einen nach Art einer Schlauchtülle ausgebildeten Ventilauslauf 3 und einen mit einem als Außengewinde ausgebildeten Gewinde 15 versehenen Ventileinlauf 2 aufweisen, so können durchaus auch Ventilkörper 1 vorgesehen werden, welche sowohl ventileinlaufseitig als auch ventilauslaufseitig ein Gewinde 15 oder eine Schlauchtülle aufweisen. Ebenso kann ein Ventilkörper 1 vorgesehen sein, welcher ventileinlaufseitig nach Art einer Schlauchtülle und ventilauslaufseitg nach Art eines Gewindes ausgebildet ist.

Der vorstehend beschriebene Ventilkörper 1 und das beschriebene Ventil 100 ermöglichen einen Einsatz des Ventils 100 an dem Übergang zwischen Leitungsbereichen unterschiedlicher Gefährdungskategorien.

### Bezugszeichen:

- 1: Ventilkörper
- 2: Ventileinlauf
- 3: Ventilauslauf
- 4: Strömungskanal
- 4.1: Strömungskanalabschnitt
- 4.2: Strömungskanalabschnitt
- 4.3: Strömungskanalabschnitt
- 5: Ventilsitz
- 6: Injektor-Trennstrecke
- 7: Rahmen
- 8: Strebe
- 9: Fenster
- 10: Düse
- 11: Düsenöffnung
- 12: Vorsprung
- 13: Blende
- 14: Blendenöffnung
- 15: Gewinde
- 16: Außenkonus
- 17: Hintergriff
- 18: Klemmbereich
- 19: Befestigungsöffnung
- 20: Stabilisierungsrippe
- 21: Ausnehmung
- 22: Befestigungspunkt
- 23: Aufnahmenut
- 24: Düsenkanal
- 100: Ventil
- 101: Ventilkörper
- 102: Schließelement
- 103: Ventilaktuator
- 104: Anschlussstelle
- 105: Befestigungsmittel
- 106: Pilotschließelement
- 107: Schließmittel
- 108: Pilotkanal

- A: Strecke
- B: Strecke
- I: Länge
- L: Längsachse
- O: Oberseite
- R: Länge
- S: Hauptströmungsrichtung

## Patentansprüche

1. Ventilkörper zur Verwendung als Teil eines Ventils mit einem Strömungskanal (4), umfassend einen im Strömungskanal (4) angeordneten Ventilsitz (5), einen anströmseitigen Ventileinlauf (2) und einen abströmseitigen Ventilauslauf (3), wobei der Strömungskanal (4) eine einstückig angeformte Injektor-Trennstrecke (6) aufweist, wobei die Injektor-Trennstrecke (6) zwischen dem Ventilsitz (5) und dem Ventilauslauf (3) angeordnet ist und wobei sich Durchbrüche (9) zum Austritt zurückdrückenden Fluids von der Injektor-Trennstrecke (6) nach ventilaußen erstrecken,
**dadurch gekennzeichnet,**
**dass** der Ventilsitz (5) einstückig mit dem Ventilkörper (1) ausgebildet ist und anströmseitig der Injektor-Trennstrecke (6) eine Düse (10) zur Bündelung eines strömenden Fluids zu einem gebündelten Freistrahl im Strömungskanal (4) angeordnet ist.

2. Ventilkörper nach Anspruch 1, **dadurch gekennzeichnet, dass** die Injektor-Trennstrecke (6), insbesondere teilweise, von einem käfigförmigen Rahmen (7) umgeben ist.

3. Ventilkörper nach Anspruch 2, **dadurch gekennzeichnet, dass** der Rahmen (7) aus einem formstabilen Material, insbesondere einem Hartplastik oder einem Metall, gefertigt ist.

4. Ventilkörper nach einem der Ansprüche 2 oder 3, **dadurch gekennzeichnet, dass** der käfigförmige Rahmen (7) mehrere gleichmäßig zueinander winkelversetzte Streben (8), insbesondere vier um 90° winkelversetzte Streben (8), aufweist.

5. Ventilkörper nach einem der vorhergehenden Ansprüche, **dadurch gekennzeichnet, dass** die Düse (10) abströmseitig nach Art eines nippelförmigen Vorsprungs (12) ausgebildet ist.

6. Ventilkörper nach Anspruch 2 oder einem der Ansprüche 3 bis 5 wenn diese direkt oder indirekt von Anspruch 2 abhängig sind, **dadurch gekennzeichnet, dass** die Düse (10), insbesondere vollständig, außerhalb des käfigförmigen Rahmens (7) angeordnet ist.

7. Ventilkörper nach einem der vorhergehenden Ansprüche, **dadurch gekennzeichnet, dass** in der Injektor-Trennstrecke (6) eine, insbesondere scheibenförmige, Blende (13) angeordnet ist.

8. Ventilkörper nach Anspruch 7, **dadurch gekennzeichnet, dass** die Blende (13) in der abströmseitigen Hälfte der Injektor-Trennstrecke (6) angeordnet ist.

9. Ventilkörper nach einem der vorhergehenden Ansprüche, **dadurch gekennzeichnet, dass** der Ventilauslauf (3) nach Art einer Schlauchtülle ausgebildet ist.

10. Ventilkörper nach einem der vorhergehenden Ansprüche, **dadurch gekennzeichnet, dass** der Ventileinlauf (2) nach Art einer Gewindeverbindung, insbesondere mit einem Außengewinde (15), ausgebildet ist.

11. Ventil, insbesondere Servoventil, mit einem zwischen einem ersten Ventilkörper (1) und einem zweiten Ventilkörper (101) angeordneten Schließelement (102) zum Öffnen und Schließen eines Ventilsitzes (5), einem anströmseitigen Ventileinlauf (2), einem abströmseitigen Ventilauslauf (3) und einem Strömungskanal (4) zur Verbindung des Ventileinlaufs (2) mit dem Ventilauslauf (3),
**dadurch gekennzeichnet,**
**dass** der erste Ventilkörper (1) nach einem der Ansprüche 1 bis 10 ausgebildet ist.

## Claims

1. Valve body for use as part of a valve with a flow channel (4) comprising a valve seat (5) arranged in the flow channel (4), a valve inlet (2) on the upstream side and a valve outlet (3) on the downstream side, the flow channel (4) having an integrally formed injector separation section (6), the injector separating section (6) being arranged between the valve seat (5) and the valve outlet (3), and openings (9) for the exit of fluid which is pressed back extending from the injector separating section (6) to the outside of the valve,
**characterized**
**in that** the valve seat (5) is formed integrally with the valve body (1) and a nozzle (10) for bundling a flowing fluid to form a bundled free jet is arranged in the flow channel (4) on the upstream side of the injector separating section (6).

2. Valve body according to claim 1, **characterized in that** the injector separation section (6) is surrounded, in particular partially, by a cage-shaped frame (7).

3. Valve body according to claim 2, **characterized in that** the frame (7) is made of a form stable material, in particular a hard plastic or a metal.

4. Valve body according to one of claims 2 or 3, **characterized in that** the cage-shaped frame (7) has a plurality of struts (8) uniformly offset at an angle to one another, in particular four struts (8) offset at an angle of 90°.

5. Valve body according to one of the preceding claims, **characterized in that** the nozzle (10) is designed on the downstream side in the manner of a nipple-shaped projection (12).

6. Valve body according to claim 2 or one of claims 3 to 5 if these are directly or indirectly dependent on claim 2, **characterized in that** the nozzle (10) is arranged, in particular completely, outside the cage-shaped frame (7).

7. Valve body according to one of the preceding claims, **characterized in that** an orifice (13), in particular in the form of a disc, is arranged in the injector separation section (6).

8. Valve body according to claim 7, **characterized in that** the orifice (13) is arranged in the downstream half of the injector separation section (6).

9. Valve body according to one of the preceding claims, **characterized in that** the valve outlet (3) is designed in the manner of a hose nozzle.

10. Valve body according to one of the preceding claims, **characterized in that** the valve inlet (2) is designed in the manner of a threaded connection, in particular with an external thread (15).

11. Valve, in particular servo valve, with a closing element (102) arranged between a first valve body (1) and a second valve body (101) for opening and closing a valve seat (5), an upstream valve inlet (2), an downstream valve outlet (3), and a flow channel (4) for connecting the valve inlet (2) to the valve outlet (3), **characterized in that** the first valve body (1) is designed according to one of the claims.

## Revendications

1. Corps de soupape pour utilisation en tant que partie d'une soupape avec un canal d'écoulement (4), comprenant un siège de soupape (5) agencé dans le canal d'écoulement (4), une entrée de soupape (2) en amont et une sortie de soupape (3) en aval, le canal d'écoulement (4) présentant une section de séparation d'injecteur (6) formée d'un seul tenant, la section de séparation d'injecteur (6) étant agencée entre le siège de soupape (5) et la sortie de soupape (3), et des ouvertures (9) pour la sortie de fluide en refoulement s'étendant de la section de séparation d'injecteur (6) vers l'extérieur de la soupape,
**caractérisé en ce que**
le siège de soupape (5) est réalisé d'un seul tenant avec le corps de soupape (1) et une buse (10) est agencée en amont de la section de séparation d'injecteur (6) pour concentrer un fluide en écoulement en un jet libre concentré dans le canal d'écoulement (4).

2. Corps de soupape selon la revendication 1, **caractérisé en ce que** la section de séparation d'injecteur (6) est entourée, notamment partiellement, par un cadre (7) en forme de cage.

3. Corps de soupape selon la revendication 2, **caractérisé en ce que** le cadre (7) est fabriqué en un matériau de forme stable, notamment en un plastique dur ou un métal.

4. Corps de soupape selon l'une quelconque des revendications 2 ou 3, **caractérisé en ce que** le cadre (7) en forme de cage présente plusieurs entretoises (8) décalées angulairement les unes par rapport aux autres de manière uniforme, notamment quatre entretoises (8) décalées angulairement de 90°.

5. Corps de soupape selon l'une quelconque des revendications précédentes, **caractérisé en ce que** la buse (10) est réalisée en aval à la manière d'une saillie (12) en forme de mamelon.

6. Corps de soupape selon la revendication 2 ou l'une quelconque des revendications 3 à 5 lorsque celles-ci dépendent directement ou indirectement de la revendication 2, **caractérisé en ce que** la buse (10) est agencée, notamment entièrement, à l'extérieur du cadre (7) en forme de cage.

7. Corps de soupape selon l'une quelconque des revendications précédentes, **caractérisé en ce qu'**un diaphragme (13), notamment en forme de disque, est agencé dans la section de séparation d'injecteur (6).

8. Corps de soupape selon la revendication 7, **caractérisé en ce que** le diaphragme (13) est agencé dans la moitié en aval de la section de séparation d'injecteur (6).

9. Corps de soupape selon l'une quelconque des revendications précédentes, **caractérisé en ce que** la sortie de soupape (3) est réalisée à la manière d'un embout de tuyau.

10. Corps de soupape selon l'une quelconque des revendications précédentes, **caractérisé en ce que** l'entrée de soupape (2) est réalisée à la manière d'une liaison filetée, notamment avec un filetage extérieur (15).

11. Soupape, notamment servosoupape, avec un élément de fermeture (102) agencé entre un premier corps de soupape (1) et un deuxième corps de soupape (101) pour l'ouverture et la fermeture d'un siège de soupape (5), une entrée de soupape (2) en amont, une sortie de soupape (3) en aval et un canal d'écoulement (4) pour la liaison de l'entrée de soupape (2) à la sortie de soupape (3),
**caractérisée en ce que**
le premier corps de soupape (1) est réalisé selon l'une quelconque des revendications 1 à 10.
